Europäisches Patentamt

European Patent Office

Office européen des brevets

(11) Publication number : **0 651 219 A1**

## (12) EUROPEAN PATENT APPLICATION

(21) Application number : **94307936.8**

(22) Date of filing : **27.10.94**

(51) Int. Cl.⁶ : **F26B 25/22,** G05D 23/19, G01K 1/02, H04B 5/00, G08C 19/28

(30) Priority : **29.10.93 GB 9322346**

(43) Date of publication of application :
**03.05.95 Bulletin 95/18**

(84) Designated Contracting States :
**AT DE ES FR GB IT PT**

(71) Applicant : **BRITISH CERAMIC SERVICE COMPANY LIMITED
Rowhurst Industrial Estate,
Chesterton
Newcastle-under-Lyme, Staffordshire ST5 6BH (GB)**

(72) Inventor : **Rowley, Arthur John, c/o British Ceramic Service
Co., Ltd,
Rowhurst Ind. Est.,
Chesterton
Newcastle, Staffordshire ST5 6BH (GB)**

(74) Representative : **Sales, Robert Reginald et al
Swindell & Pearson,
48 Friar Gate
Derby DE1 1GY (GB)**

(54) **Kiln control.**

(57)    Apparatus for controlling a kiln, the apparatus comprising : a computer 32 connected to the kiln's controls ; a plurality of mobile sensor units 34 to detect for example temperature, a number of such units being provided at different points on each kiln car ; and an air core signal transformer 36 to transmit readings made by the units 34 to the computer 32. The computer 32 controlling the heating supply of the kiln 20 and other appropriate controls in accordance with the temperatures measured at the different points on the kiln cars.

Fig.1

EP 0 651 219 A1

This invention concerns improvements in or relating to control of processing equipment, especially kilns, and particularly but not exclusively: kiln control apparatus; kilns fitted with such an apparatus; and a method of kiln control.

Kilns have been used for many years in the manufacture of ceramic articles. It is important to provide the correct atmospheric conditions within a kiln to ensure correct firing of the ceramic ware or other articles in the kiln. Atmospheric conditions will vary within the kiln and there will exist for example a temperature gradient with the highest temperatures being at or near the top of the kiln. Theoretical models can be constructed of such temperature gradients based on previous firings in order to try and provide a required temperature at any particular point in the kiln. However, such a temperature gradient is only theoretical and differences in for example the loading of ware in the kiln can alter this gradient as an increased weight of ware will absorb more heat. Furthermore, the shape of the ware can affect heat flow through the kiln.

The atmospheric conditions in a kiln which are of particular importance to firing are especially temperature, but also humidity, and the levels of carbon monoxide, carbon dioxide, oxygen and sulphur oxide.

According to the present invention there is provided control apparatus for processing equipment, the apparatus comprising a sensor locatable within the equipment for sensing atmospheric conditions, transmitter means for sending a signal from the sensor to a remote discrete receiver means, control means connected to the receiver means to decode signals received therefrom, the control means being connectable to the equipment so as to automatically control the functions of the equipment in response to the signals received.

A plurality of sensors are preferably provided. One or more of the sensors is preferably locatable in a fixed position in the equipment whilst one or more other of the sensors is preferably locatable on support apparatus for articles being processed, such apparatus being movable into and out of the equipment.

The sensors in the equipment and/or on the article support apparatus are preferably provided at different heights such that a profile of conditions in the equipment may be detected.

The sensors preferably sense any of: temperature; humidity; carbon monoxide, carbon dioxide, oxygen, or sulpur oxide content.

The sensors may also provide an indication of the location of the article support apparatus such that the control apparatus can correlate the atmospheric conditions sensed relative to the particular location of the article support apparatus.

The sensors may be used to identify the particular article support apparatus and/or load provided thereon such that the equipment functions are controlled accordingly.

Where the sensors are used for temperature detection, high temperature thermocouples may be used. Such sensors may include means for converting the signal from the thermocouples into digital form.

The transmitter and the receiver means preferably communicate by magnetic coupling.

The transmitter and receiver means may be linked by an air core signal transformer comprised of loops of wire arranged to provide good magnetic coupling. For a sensor on article support apparatus, the transmitter means may comprise several turns of wire around the support apparatus. The receiver means may comprise a wire which extends through the equipment, preferably with a loop with parallel sides extending from one end of the equipment to a 180° turn at or adjacent the other end.

Alternatively, the transmitter means may communicate with the receiver means by telemetry.

The sensors may communicate with the control means by time multiplexing.

The control means may include means for displaying and/or storage of the atmospheric conditions data.

The invention also provides kiln control apparatus according to any of the preceding twelve paragraphs.

The invention further provides an assembly comprising a kiln, ware support apparatus, and kiln control apparatus according to any of said preceding twelve paragraphs.

A plurality of ware support apparatus are preferably provided, which may comprise kiln cars.

The kiln may be an intermittent kiln. Alternatively the kiln may comprise a tunnel kiln.

With magnetic coupling between the transmitter and receiving means, the transmitter may include a wire extending parallel to and adjacent the floor of the kiln in a single loop. The receiver means may comprise a plurality of windings around the kiln car.

The invention still further provides a method of controlling processing equipment, the method comprising sensing atmospheric conditions in the equipment, sending a signal corresponding to the condition to a remote discrete location outside of the equipment, and controlling the functions of the equipment in response to the conditions sensed.

The conditions sensed may include any of: temperature; humidity; carbon monoxide, carbon dioxide, oxygen or sulphur oxide content.

Conditions may be sensed at a plurality of locations in the equipment. Conditions are preferably sensed at locations on support apparatus for articles being processed in the equipment.

The signals are preferably communicated to the remote location by magnetic coupling.

The method may also include sensing the location of article support apparatus in the equipment and/or, identifying the particular article support apparatus and/or the article or articles thereon.

The invention still further provides a method of controlling a kiln, the method being according to any of the preceding five paragraphs.

Figure 1 is a perspective view of an entrance to a tunnel kiln with a loaded car about to enter the kiln;

Figure 2 is a schematic block diagram of the overall system of the present invention;

Figure 3 is a schematic block diagram, of a mobile sensor unit of the present invention;

Figure 4 is a schematic block diagram of a modulator/transmitter of the present invention;

Figure 5 is a schematic block diagram of a receiver/demodulator of the present invention;

Figure 6 is a schematic block diagram of a personal computer communication board for use with the present invention;

Figure 7 is a schematic representation of an air-core transformer of the present invention; and

Figures 8 A-R are electrical circuit diagrams of components of the present invention.

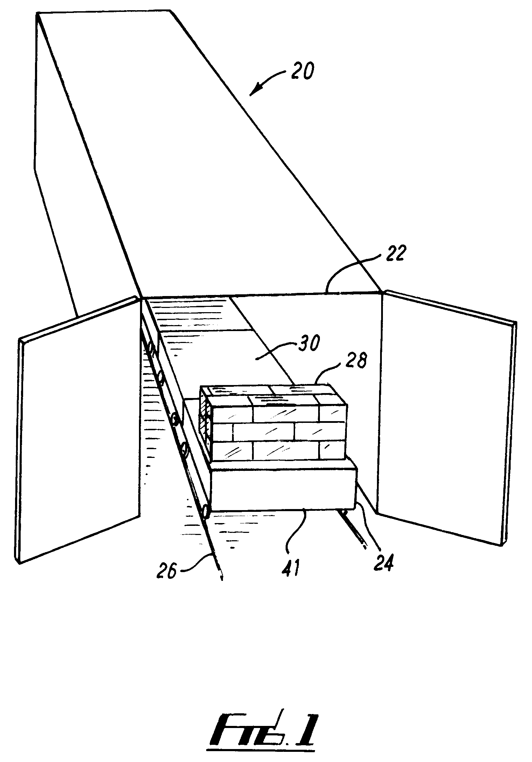

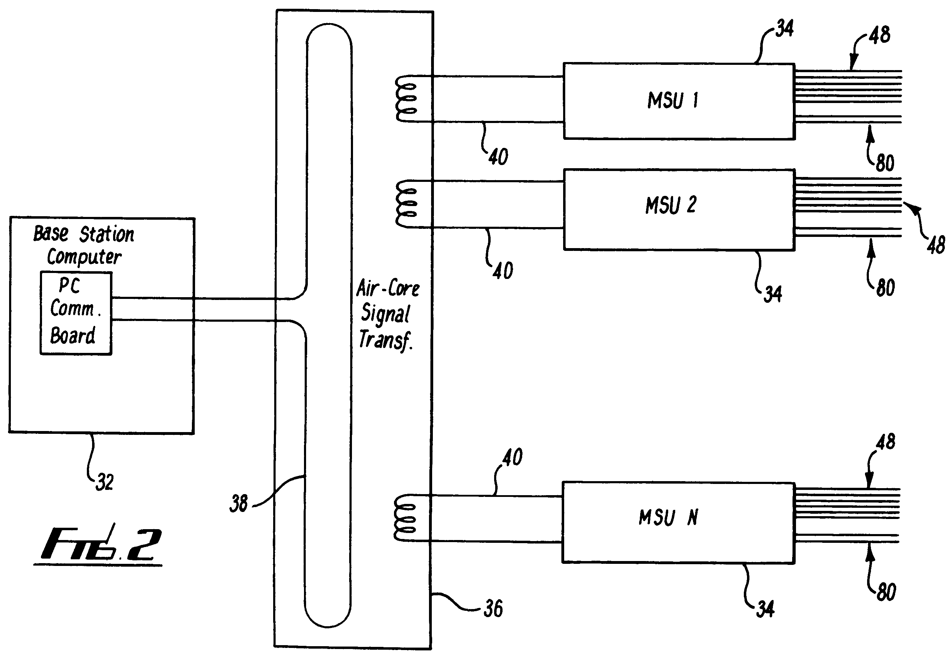

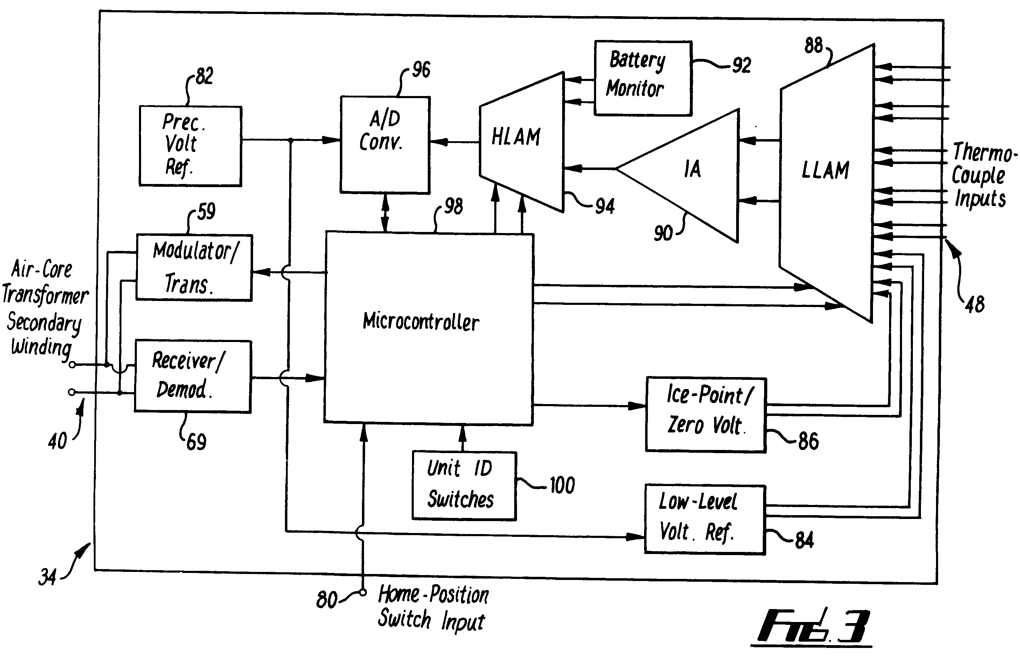

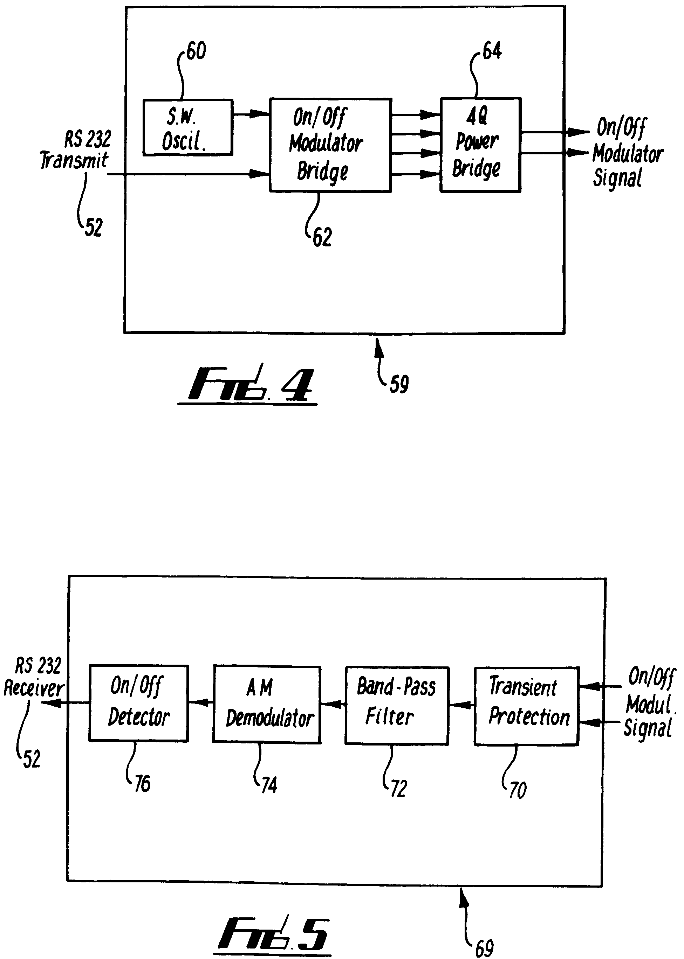

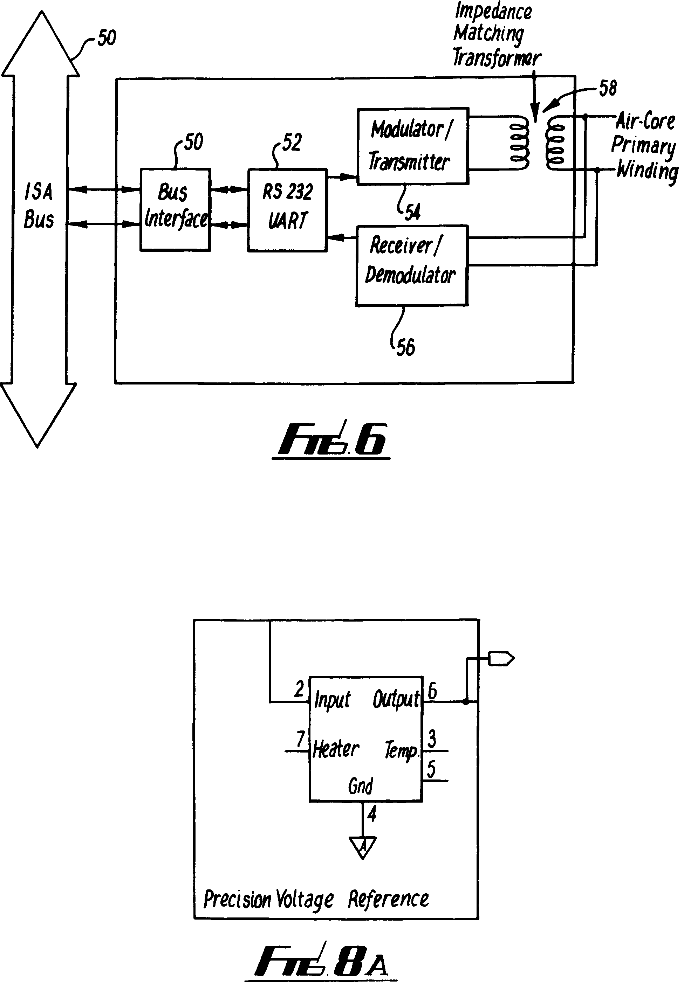

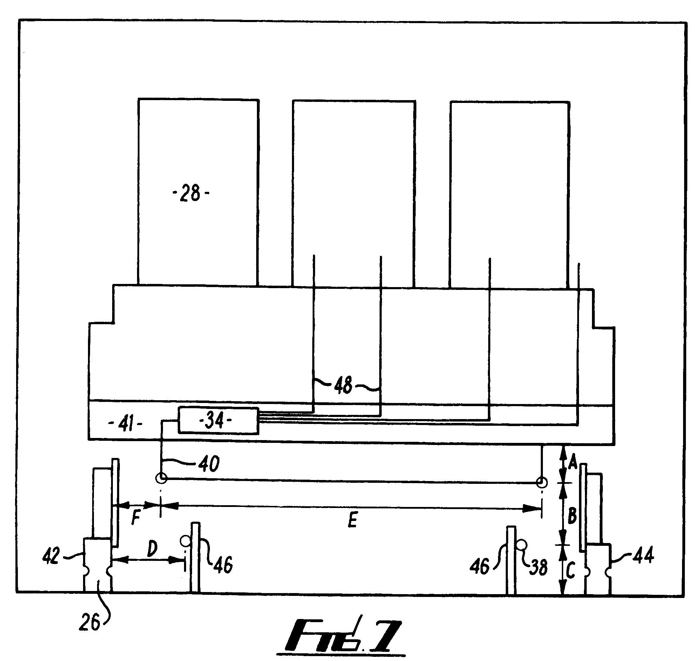

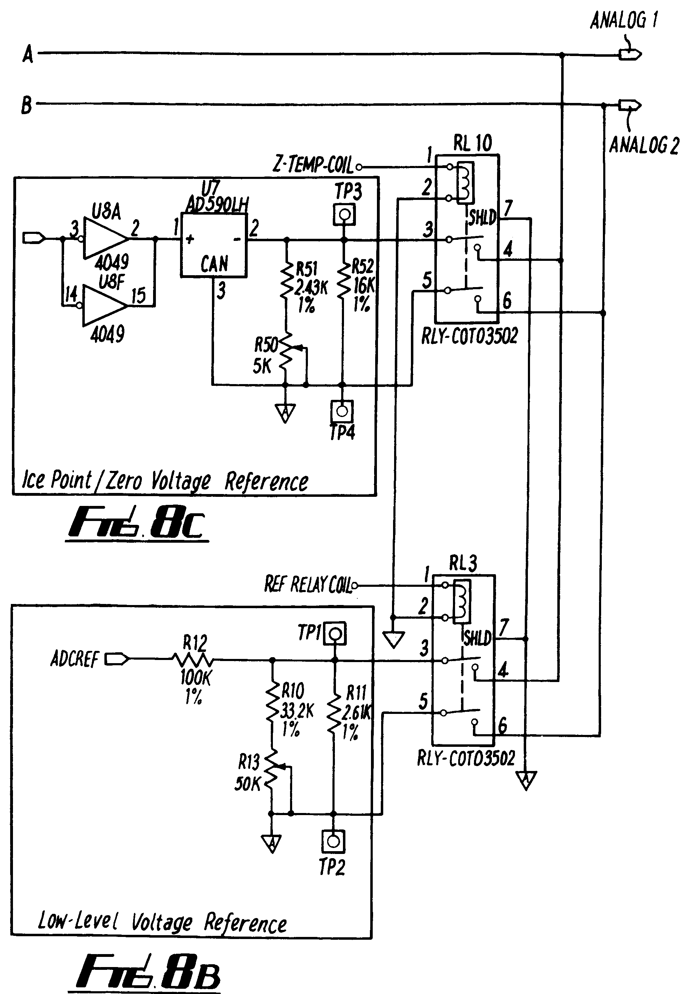

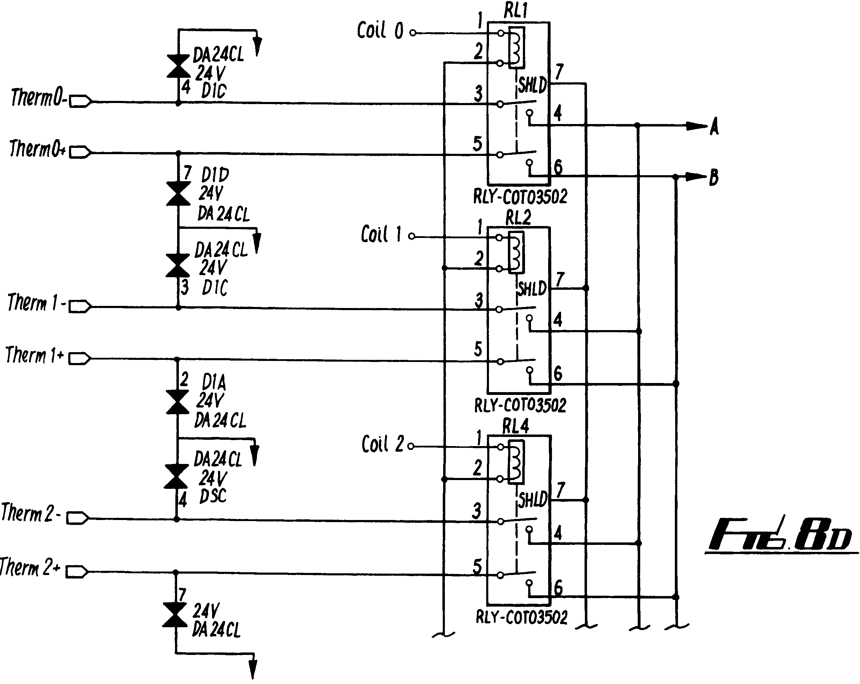

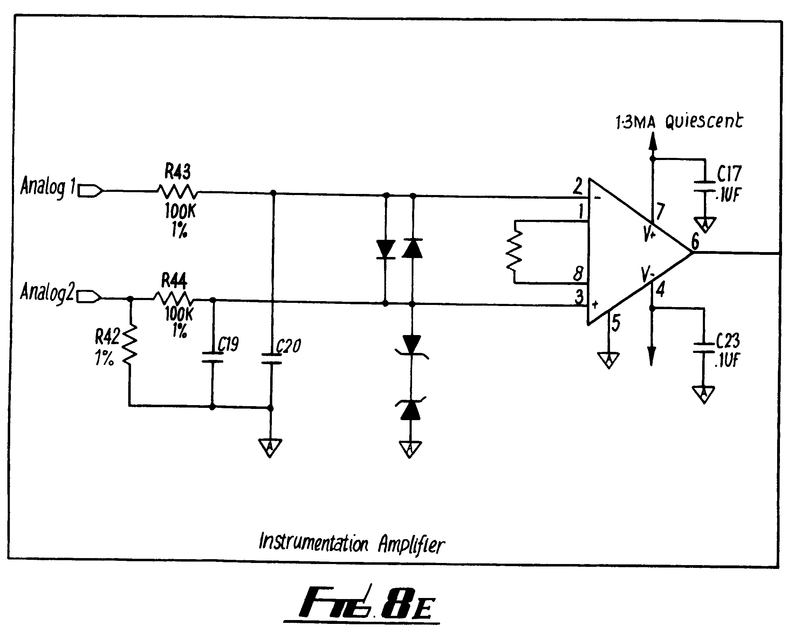

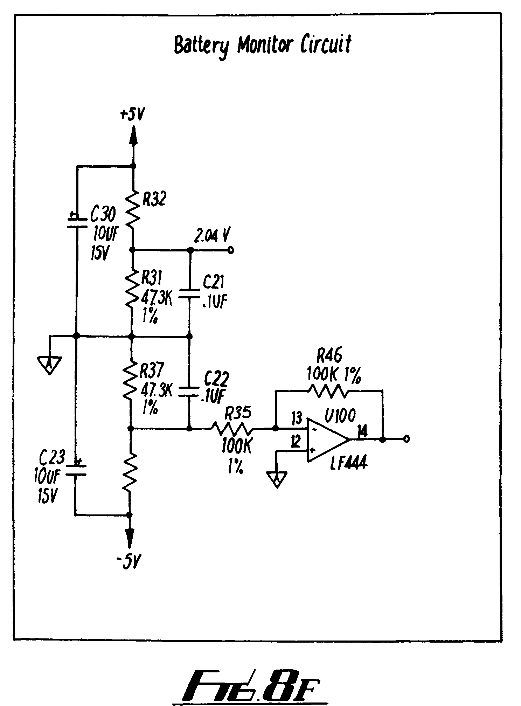

Referring now to Figure 1, there is shown a tunnel kiln 20 with an entrance 22 for receiving a car 24 movable on a track 26. The car 24 is loaded with articles 28 to be fired in the kiln 20. The articles 28 rest on the deck 30 of the car 24. The track 26 passes longitudinally through the tunnel of the kiln. The interior of the tunnel of the kiln is adapted to generate very high levels of heat to fire or bake the articles that pass through the kiln.

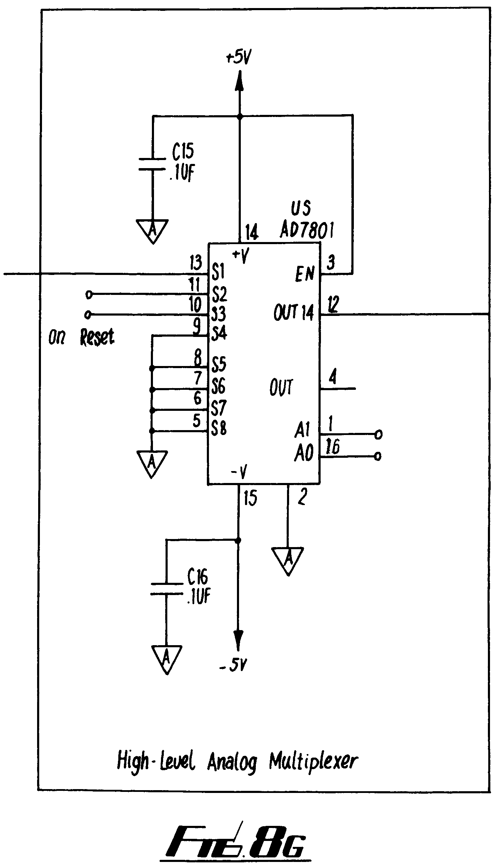

Referring to Figure 2, the present invention comprises three major subsystems: a base station computer 32 connected to the controls (not shown) of the kiln 20; mobile sensor units 34; and an air-core signal transformer 36 used as the communication link between the base station 32 and the mobile sensor units (MSU's) 34. The present invention provides a means by which the temperature at a plurality of different points on each of a plurality of moving kiln cars, can be measured, transmitted to a fixed computer, and the computer 32 control the heating supply in the kiln 20 in accordance with the measured temperatures at the different points. The measured temperatures may also be displayed graphically, and/or the data stored for later analysis. Provision may also be made to detect when each kiln car moves past a certain location.

The air-core signal transformer inputs include a primary winding 38 connected to the base station computer and secondary windings 40 connected to the MSU's. The air-core signal transformer outputs include a primary winding connected to a base station computer and secondary windings connected to the MSU's. Communication between the computer and the MSU's is established via magnetic energy linked primary and secondary windings of the air-core signal transformer. The transformer may be designed to operate efficiently at a selected excitation frequency, such as 20 kHz. Since the physical dimensions of the transformer windings are negligibly small relative to the wave length of the excition source, negligible electromagnetic radiation is produced.

The computer 32 is connected conventionally by wires 33 to the controls of the kiln 20.

Referring particularly to the transformer primary winding it may have as its inputs an on-off modulated electrical excitation from the base station computer and magnetic flux from the secondary windings. The outputs may include an on-off modulated voltage to the base station computer and magnetic flux to the secondary windings. The primary winding in a preferred embodiment of the present invention consists of a single turn loop of wire.

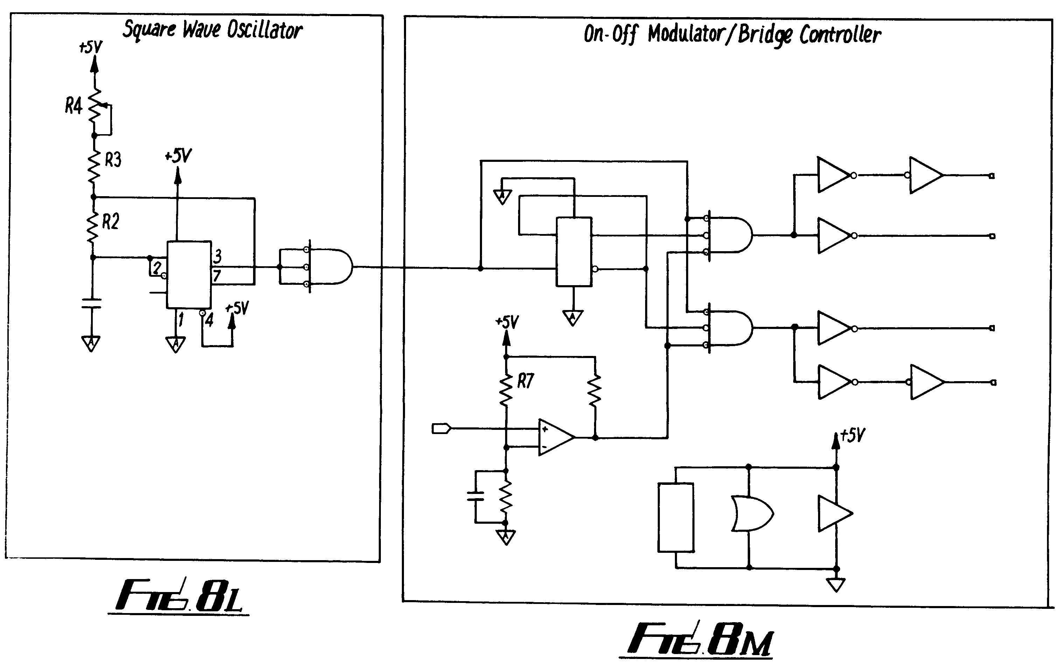

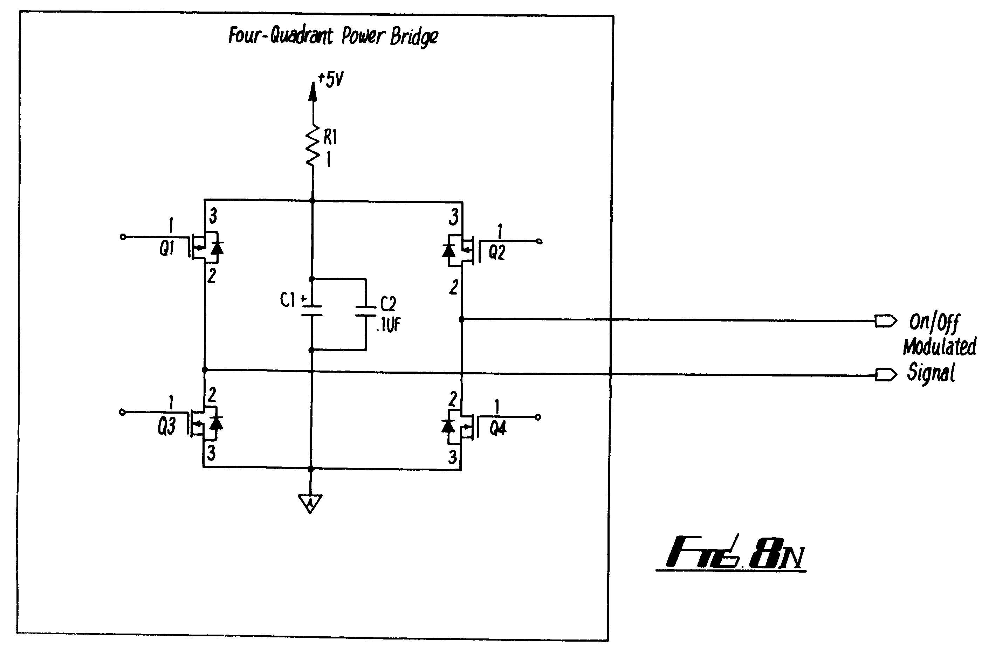

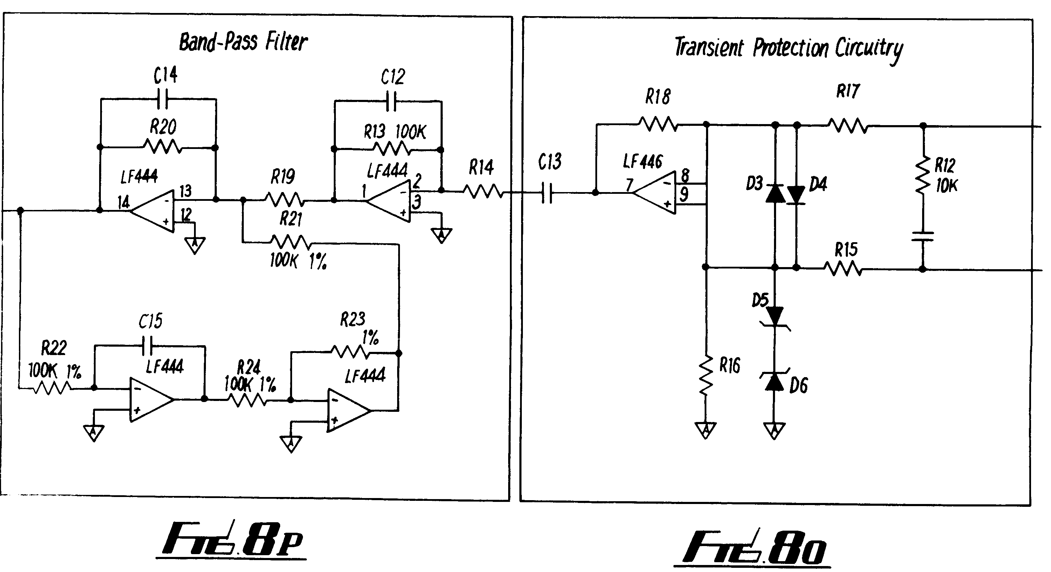

Referring to Figure 7, the primary loop is formed by running a conductor through the kiln 20 beneath the kiln cars 24, but above the floor of the kiln and parallel to the track 24 inside the kiln. Preferably the wire runs parallel to one side 42 of the track until it reaches an end of the kiln and there it forms a loop to the other side 44 of the track and follows the other track rail, running parallel to it, back through the kiln on the opposite side of the first pass of the wire. The resulting loop of wire 38 is preferably oriented horizontally. The wire may be supported by a variety of different support means such as insulator posts 46 secured to the floor.

The secondary windings of the transformer have as inputs an on-off modulated electric excitation from individual MSU's, and magnetic flux from the primary winding. The outputs of the secondary windings include the on-off modulated voltage to individual MSU's, and magnetic flux to the primary winding.

Preferably one multiple-turn secondary winding 40 is installed around the bottom periphery 41 of each of the MSU-equipped cars. This winding preferably has the same horizontal orientation as the primary winding. The MSU 34 is positioned within the kiln car chassis with each MSU 34 having several inputs from a plurality of thermocouple connections 48, sensing the conditions within the articles 28.

With reference to Figure 7, the transformer coil geometry for a given kiln may preferably incorporate the following relationships:

B is less than or equal to E/10;

A is greater than or equal to B/2;

C is greater than or equal to B/2;

the absolute value of D is less than or equal to B; and the absolute value of F is greater than or equal to B/2.

The electronics assembly mounted on the cars in one embodiment does not contain provisions for matching the impedance of the secondary coils. Thus the number of turns of each secondary coil is chosen to make the inductance of the coil approximately one millihenry. The inductance of a round air-core with a diameter very much greater than its length is approximately determined by the equation:

$$L = 3.585 * N^2 * D \text{ MICROHENRIES}$$

In the equation N is the number of turns and D is the diameter of the coil in meters. The inductance of a rectangular loop can be approximated from this equation, thus given the loop diameter and the specified inductance, the appropriate number of turns N can be computed.

The base-station computer has as its physical input the air-core transformer primary winding, and as its data input, the messages transmitted thereon. The output of the base station computer provides suitable signals to control the kiln 20, and particularly the heating supply therein in response to the temperatures recorded throughout the kiln.

Whilst it is usual for temperature to be provided in the form of an anolog signal to a suitable control instrument, the base station computer would preferably utilize the digital information directly from the air core primary winding 58 and receiver 56 in communicating with a control instrument.

The computer output may also include the graphical and numerical temperature data in human readable form, temperature data filed, and its physical output is the air-core transformer primary winding. The base-station computer may be programmed to graphically display temperature data in real time, and store data for later analysis.

The temperature data is obtained from each of the MSU's. The base-station computer communicates with the MSU's preferably using a serial data protocol over the air-core signal transformer. The base-station may act as a moderator, commanding each of the MSU's to transmit only when specifically requested by the base-station. This would result on no more than one winding of the air-core transformer being driven at any given instant.

The base-station computer preferably comprises an industry standard architecture (ISA) personal computer (PC), application software to implement the functionality described above, and a PC communication board. The inputs to the PC communication board may include on-off modulated serial data from the air-core transformer and the ISA bus data and control. The outputs from the communication board would include on-off modulated serial data to the air-core transformer and ISA bus data and control. The communication board provides the base-station PC with the ability to communicate over the air-core signal transformer to the MSU's.

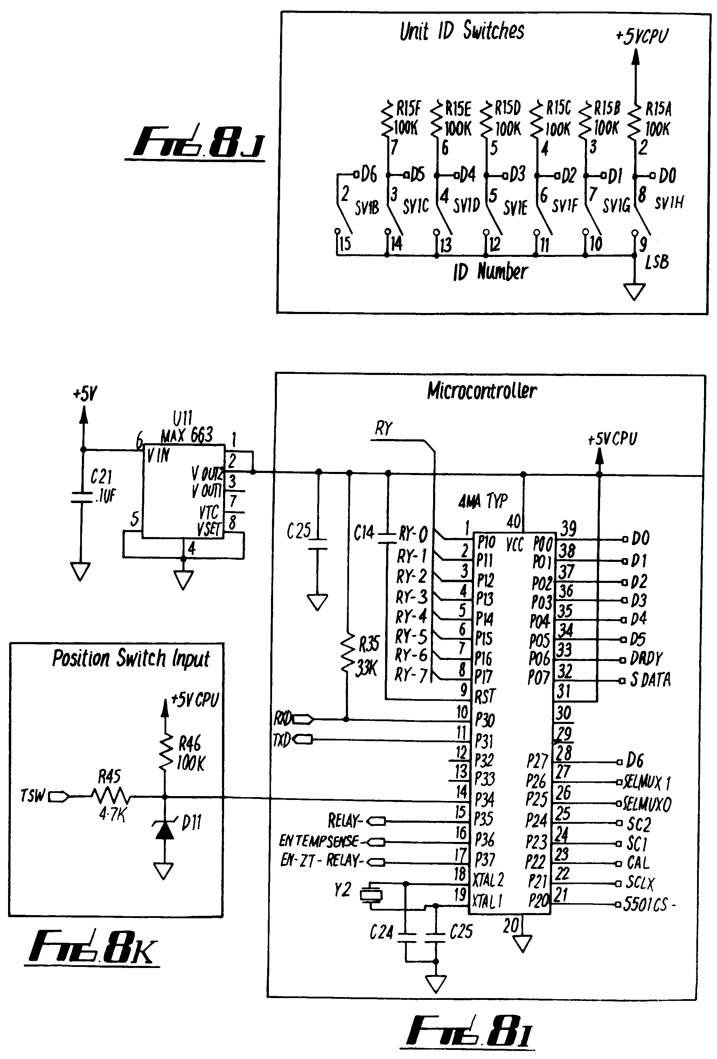

As shown in Figure 6, the communication board preferably comprises five functional blocks of circuitry: a standard bus interface circuit 50; an RS 232 UART standard circuit 52; a modulator/transmitter 54; a demodulator/receiver 56; and an impedance-matching transformer 58 which may be used to step-down the drive voltage from the base station transmitter prior to being applied to the primary coil. Without this transformer the primary coil current would be excessively high due to its low inductance.

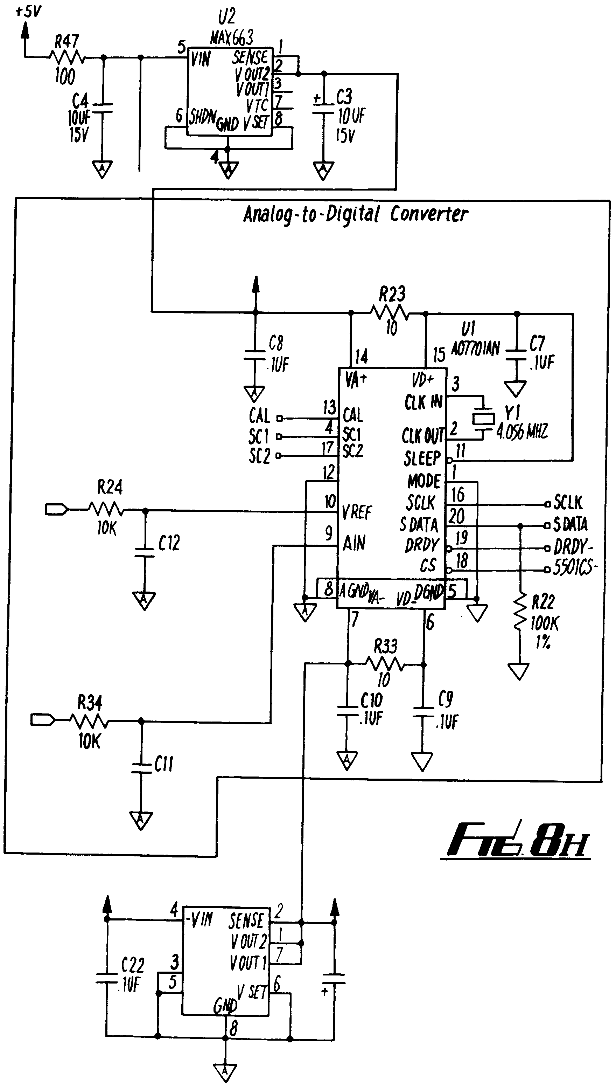

As shown in Figure 3, each mobile sensor unit of the present invention preferably has several inputs from a plurality of thermocouple 48 connections, a kiln car home position switch 80, and the air-core transformer secondary winding 40. The output of each mobile sensor unit would preferably be the air-core transformer secondary winding. The MSU's are attached to the underside of the kiln cars, preferably in temperature regulated enclosures. The MSU's preferably contain the circuitry necessary to amplify the thermocouple signals 48, convert them to digital format, and transmit the digital information to the base-station computer upon command. In one preferred embodiment of the present invention each MSU comprises up to fourteen functional blocks of circuitry which are described hereinafter.

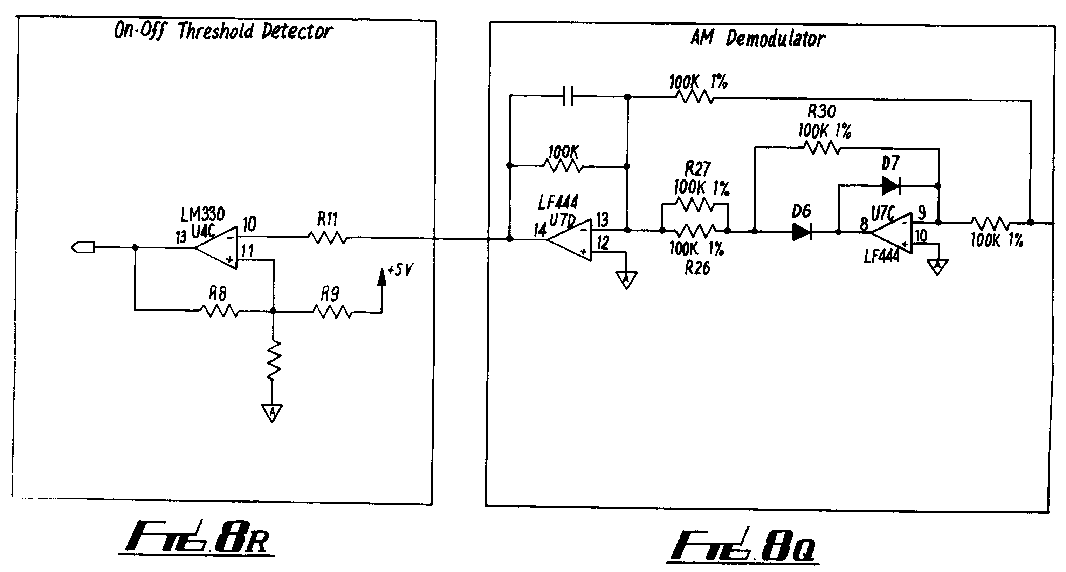

Each MSU would preferably have a precision voltage reference 82 (also shown in Figure 8A). This is a highly stable circuit which produces a precise DC voltage under all conditions. The absolute accuracy of the precision reference voltage determines the accuracy of the overall system. All other significant sources of error may be removed through self-calibration procedures.

Each MSU would preferably contain a low level voltage reference circuit 84 (also shown in Figure 8B). This circuit reduces the precision reference voltage to a value which is comparable to thermocouple output voltages. It can be input to the instrumentation amplifier circuitry and used to calibrate the amplifier and analog-to-digital converter.

Each MSU would preferably have an ice-point/zero-voltage reference 86 (also shown in Figure 8C). This circuit serves two functions. First, it preferably contains a precise electronic thermometer which is used to measure the temperature inside the electronics enclosure. This information is used to compute absolute thermocouple temperature. The basic thermocouple circuitry may only measure the thermocouple termperatures relative to the temperature inside the electronics enclosure. The second function of this block of circuitry is the capability to command the electronic thermometer to turn off its output which results in zero volts being output. This voltage can be input to the instrumentation amplifier and used to calibrate the instrumentation amplifier and the analog-to-digital converter.

Each MSU would preferably include a low level analog multiplexer 88 (also shown in Figure 8D). The circuit of the multiplexer would preferably be of conventional design and used to connect any one of the low level voltage inputs (from the thermocouples, the low level voltage reference, and the ice point/zero voltage reference) to the instrumentation amplifier. The multiplexer may be a differential type constructed of reed relays. An alternative design is to provide separate amplifiers for each signal, then use a high level, solid state analog multiplexer. Inputs of this block of circuitry are connected to the instrumentation amplifier as commanded by the microcontroller.

Each MSU may further include a thermocouple fault detection means which allows the MSU to automatically detect any disconnected or broken thermocouples. A low level voltage reference circuit may be connected in parallel with each thermocouple input. When a voltage is applied to the circuit, if a thermocouple is broken, the resulting voltage will be equal to the low level voltage reference.

Each MSU preferably includes an instrumentation amplifier 90 (also shown in Figure 8E). This circuit may be of conventional design, to amplify small voltages (such as those generated by thermocouples) to a level which is compatible with the analog-to-digital converter input. It is preferably a differential type amplifier, which means that potential error sources (such as electromagnetic radiation) which cause equal error voltages to appear on both thermocouple leads will not cause measurement errors.

Each MSU preferably includes a battery monitor circuit 92 (also shown in Figure 8F). The circuit converts voltages from the two power supply batteries to levels which are compatible with the analog-to-digital converter. This allows the microcontroller to monitor the battery voltages and issue warnings before the batteries become fully discharged.

Each MSU preferably includes a high level analog multiplexer 94 (also shown in Figure 8G). This circuit is preferably of conventional design and allows the microcontroller to select any of three high level voltages (the instrumentation amplifier output and the two battery voltages) for connection to the analog-to-digital converter.

Each MSU preferably contains an analog-to digital converter circuit 96( also shown in Figure 8H) of conventional design. This circuit converts analog voltage levels to binary digital values. Preferably the particular converter used provides self-calibration features and a serial data interface to the microcontroller 98 (also shown in Figure 8I).

Each MSU preferably includes a microcontroller 98 of a standard configuration known to those of ordinary skill in the art which provides all of the functionality of a small computer. It may also have many digital I/O lines to control other circuitry and provide an RS 232 format input and output for communication with the base-section computer. Software installed in the microcontroller may provide for data processing, communication, and control features needed on each MSU.

Each MSU preferably has unit ID switches 100 (also shown in Figure 8J). This circuit may contain seven switches connected to the microcontroller which are used to uniquely identify each of the MSU's which may be incorporated in a given kiln monitor system. The unit ID would allow the base-station to address each MSU individually.

Each MSU would preferably include a home position switch input 80 (also shown in Figure 8K). This provision is made for the connection of a normally open switch to a microcontroller input. For example, this switch would be closed upon reaching a certain location such as the kiln entrance. This would allow the base-station to establish the position of each MSU that is in service.

Referring to Figure 4, each MSU would preferably contain a modulator/transmitter circuit 59. The input to the circuit would be the TTL-level, RS 232-format serial data 52 while the output would be the on-off modulated, RS 232-format serial data 53 to the air-core transformer winding on the impedance matching transformer. This circuit converts the TTL-level, RS 232 format serial data into on-off (amplitude) modulated, RS 232-format serial data, and transmits the resulting signal over the air-core magnetic transformer. Since the serial data is binary, only two amplitudes are needed: on and off (zero volts). The modulation frequency used is preferably approximately 20kHz. The modulator/transmitter preferably comprises three functional blocks of circuitry. The first is a square wave oscillator 60 of a standard circuit (shown in Figure 8L) which generates a square wave suitable with a four quadrant power bridge. The second block of circuitry (shown in Figure 8M) is the on-off modulator/bridge controller 62. When the transmit input is true, this circuit generates control ouputs to the four quadrant power bridge 64 which cause it to output a 20 kHz square wave. When the transmit signal is false, the power bridge is set to a high impedance state. The third functional block is circuity in the modulator/transmitter is a four quadrant power bridge 64. This is a standard circuit (shown in Figure 8N) generally used in pulse width modulated motor control circuits. It is preferred for this application because of its excellent energy efficiency.

The final preferred functional block of circuitry in each MSU is a receiver/demodulator circuit 69 (shown in Figure 5). This circuit may have as its input on-off modulated RS 232-format serial data from the air-core transformer winding or the impedance matching transformer 58. Its output would be ITL-level, RS 232-format serial data 52. The receiver-demodulator converts RS 232-format, on-off modulated signals from the air-core transformer (or impedance matching transformer) into RS 232-format, TTL-level signals. It preferably comprises four functional blocks of circuitry. The first is a transient protection circuitry 70 of conventional design (shown in Figure 8O) which prevents static discharges or other sources of high voltage from damaging the receiver inputs. The second is a band pass filter 72 of conventional design (shown in Figuire 8P) which permits the communication signals to pass through, but blocks all other frequencies (which could otherwise result in interference problems). The third is an AM demodulator circuit 74 of conventional design (shown in Figure 8Q) which produces an output voltage that is proportional to the amplitude of the incoming signal. Fourth is an on/off threshold detector 76 of conventional design (shown in Figure 8R) which detects if the amplitude of the incoming signal is large enough to be considered "on". The output of this circuit is at a voltage level compatible with digital logic circuitry.

There is thus described a system and apparatus for monitoring and controlling the temperature within a kiln in the light of the actual temperature profile in the kiln rather than a theoretical model. As noted above the actual temperature profile can vary considerably due to the size and type of ware in the kiln as well as other factors. Accordingly it is possible to provide more accurate temperature control throughout the kiln and thus better and more economic firing. By sending signals from the MSU to a remote computer, complicated hard wiring is avoided. In large tunnel kilns for example, hard wiring would be wholly impractical if not impossible, particularly bearing in mind the long distances travelled and the harsh conditions experienced in kilns.

It should be noted that the foregoing disclosure describes only preferred embodiments of the present invention and that modifications may be made therein without departing from the spirit and scope of the invention. For example, although thermocouples have been discussed in connection with the preferred embodiment, it is possible to incorporate other sensors in a manner similar to that described herein for thermocouples.

Such other sensors could measure temperature or other atmospheric conditions. Other important atmospheric conditions in kilns are humidity and the levels of carbon monoxide, carbon dioxide, oxygen and sulphur oxide. The computer could be connected to the kiln controls to respond according to the different conditions detected.

It is to be appreciated that other means could be provided for communicating between the MSU's and the computer. For example telemetry could be used.

The system of monitoring temperature and controlling the temperature profile of a kiln or measuring other atmospheric conditions and responding accordingly, may have equal application to other industries. This system could be used in a wide range of processing equipment such as may be used for example in the metallurgical field or the food processing field.

The various circuits described herein and shown in the accompanying drawings are clearly susceptible to modification without departing from the overall function, means, and result of the present invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Control apparatus for processing equipment, the apparatus comprising a sensor locatable within the equipment for sensing atmospheric conditions, transmitter means for sending a signal from the sensor to a remote discrete receiver means, characterised in that the apparatus also comprises control means connected to the receiver means to decode signals received therefrom, the control means being connectable to the equipment so as to automatically control the functions of the equipment in response to the signals received.

2. Apparatus according to claim 1, characterised in that a plurality of sensors are provided.

3. Apparatus according to claim 2, characterised in that one or more of the sensors is locatable in a fixed position in the equipment whilst one or more other of the sensors is locatable on support apparatus for articles being processed, such apparatus being movable into and out of the equipment.

4. Apparatus according to claims 2 or 3, characterised in that the sensors in the equipment and/or in the article support apparatus are provided at different heights such that a profile of conditions in the equipment may be detected.

5. Apparatus according to any of claims 2 to 4, characterised in that the sensors sense any of: temperature; humidity; carbon monoxide, carbon dioxide, oxygen, or sulphur oxide content.

6. Apparatus according to claim 3 or either of claims 4 or 5 when dependent on claim 3, characterised in that the sensors provide an indication of the location of the article support apparatus such that the control apparatus can correlate the atmospheric conditions sensed relative to the particular location of the article support apparatus.

7. Apparatus according to claim 6, characterised in that the sensors can be used to identify the particular article support apparatus and/or load provided thereon such that the equipment functions are controlled accordingly.

8. Apparatus according to claim 5 or either of claims 6 or 7 when dependent on claim 5, characterised in that where the sensors are used for temperature detection, high temperature thermocouples are used.

9. Apparatus according to claim 8, characterised in that such sensors include means for converting the signal from the thermocouples into digital form.

10. Apparatus according to any of the preceding claims, characterised in that the transmitter and the receiver means communicate by magnetic coupling.

11. Apparatus according to claim 10, characterised in that the transmitter and receiver means are linked by an air core signal transformer comprised of loops of wire arranged to provide good magnetic coupling.

12. Apparatus according to claim 11 when dependent on at least claim 3, characterised in that the transmitter means comprises several turns of wire around the support apparatus.

13. Apparatus according to claims 11 or 12, characterised in that the receiver means comprises a wire which extends through the equipment.

14. Apparatus according to claim 13, characterised in that the receiver means comprise a wire with a loop with parallel sides extending from one end of the equipment to a 180° turn at or adjacent the other end.

15. Apparatus according to any of claims 1 to 10, characterised in that the transmitter means communicates with the receiver means by telemetry.

16. Apparatus according to claim 2 or any of claims 3 to 15 when dependent on claim 2, characterised in that the sensors communicate with the control means by time multiplexing.

17. Apparatus according to any of the preceding claims, characterised in that the control means includes means for displaying and/or storage of the atmospheric conditions data.

18. Kiln control apparatus, characterised in that the apparatus is according to any of claims 1 to 17.

19. An assembly comprising a kiln, ware support apparatus, and kiln control apparatus, characterised in that the kiln control apparatus is according to any of claims 1 to 17.

20. An assembly according to claim 19, characterised in that a plurality of ware support apparatus are provided.

21. An assembly according to claim 20, characterised in that the ware support apparatus comprise kiln cars.

22. An assembly according to any of claims 19 to 21, characterised in that the kiln is an intermittent kiln.

23. An assembly according to any of claims 19 to 21, characterised in that the kiln comprises a tunnel kiln.

24. A method of controlling processing equipment, the method comprising sensing atmospheric conditions in the equipment, sending a signal corresponding to the condition to a remote discrete location outside of the equipment, characterised in that the method also comprises controlling the functions of the equipment in response to the conditions sensed.

25. A method according to claim 24, characterised in that the conditions sensed include any of: temperature; humidity; carbon, monoxide, carbon dioxide, oxygen or sulphur oxide content.

26. A method according claims 24 or 25, characterised in that conditions are sensed at a plurality of locations in the equipment.

27. A method according to any of claims 24 to 25, characterised in that conditions are sensed at locations on support apparatus for articles being processed in the equipment.

28. A method according to claim 27, characterised in that the method includes sensing the location of article support apparatus in the equipment and/or, identifying the particular article support apparatus and/or the article or articles thereon.

29. A method according to any of claims 24 to 28, characterised in that the signals are communicated to the remote location by magnetic coupling.

30. A method of controlling a kiln, characterised in that the method is according to any of claims 24 to 29.

*FIG. 1*

*FIG.2*

EP 0 651 219 A1

Fig. 3

EP 0 651 219 A1

EP 0 651 219 A1

RS 232
Transmit
52

60
S.W.
Oscil.

62
On/Off
Modulator
Bridge

64
4Q
Power
Bridge

On/Off
Modulator
Signal

_Fig. 4_

59

RS 232
Receiver
52

On/Off
Detector
76

AM
Demodulator
74

Band-Pass
Filter
72

Transient
Protection
70

On/Off
Modul.
Signal

_Fig. 5_

69

11

_50_

_50_ Bus Interface

_52_ RS 232 UART

Modulator/ Transmitter _54_

Receiver/ Demodulator _56_

ISA Bus

Impedance Matching Transformer

_58_

Air-Core Primary Winding

_Fig. 6_

2 Input    Output 6

7 Heater   Temp. 3
                  5

Gnd
4

Precision Voltage Reference

_Fig. 8_A

EP 0 651 219 A1

Fig. 7

ANALOG 1

A

B

ANALOG 2

Z-TEMP-COIL

RL 10

U7
AD 590LH

U8A

4049

U8F

4049

CAN

TP3

R51
2.43K
1%

R52
16K
1%

R50
5K

TP4

SHLD

RLY-COT03502

Ice Point/Zero Voltage Reference

## FIG. 8C

REF RELAY COIL

RL3

ADCREF

R12
100K
1%

TP1

R10
33.2K
1%

R11
2.61K
1%

R13
50K

TP2

SHLD

RLY-COT03502

Low-Level Voltage Reference

## FIG. 8B

14

FIG. 8D

EP 0 651 219 A1

1·3MA Quiescent

Analog 1

R43
100K
1%

Analog2

R44
100K
1%

R42
1%

C19

C20

C17
.1UF

C23
.1Uf

V+

V−

2
1

8

3

7

6

5

4

Instrumentation Amplifier

**Fig. 8E**

Battery Monitor Circuit

Fig.8F

+5V

C15
.1UF

US
AD7801

14
+V

13 S1
11 S2
10 S3
9 S4
8 S5
7 S6
6 S7
5 S8

EN 3

OUT 14 12

OUT 4

A1 1
A0 16

-V
15    2

On Reset

C16
.1UF

-5V

High-Level Analog Multiplexer

*FIG. 8G*

Fig. 8H

EP 0 651 219 A1

Fig.8J

Unit ID Switches

Fig.8K

Position Switch Input

Fig.8I

Microcontroller

20

Square Wave Oscillator

$Fig.8L$

On-Off Modulator/Bridge Controller

$Fig.8M$

Four-Quadrant Power Bridge

+5V

R1
1

C1 +    C2
        .1UF

Q1

Q2

Q3

Q4

On/Off
Modulated
Signal

FIG. 8N

EP 0 651 219 A1

*Fig.8o*

Transient Protection Circuitry

*Fig.8p*

Band-Pass Filter

On-Off Threshold Detector

AM Demodulator

100K 1%

R30
100K 1%

100K

R27
100K 1%

D7

LM330
13 U4C
10
11

R11

LF444
14 U7D
13
12

D6

U7C
8
9
10

R8

R9

+5V

R26
100K 1%

LF444

100K 1%

EP 0 651 219 A1

Fig. 8R

Fig. 8Q

European Patent Office

**EUROPEAN SEARCH REPORT**

Application Number

EP 94 30 7936

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-C-42 19 465 (NOVOKERAM MAX WAGNER GMBH)<br><br>* the whole document * | 1-7,10, 15-22, 24-30 | F26B25/22<br>G05D23/19<br>G01K1/02<br>H04B5/00<br>G08C19/28 |
| A | DATABASE WPI<br>Week 8925,<br>Derwent Publications Ltd., London, GB;<br>AN 89-184252<br>ANONYMOUS 'Telemetric sensor module for profiling belt furnaces - has calibration module with thermocouples passed through oven or belt'<br>* abstract *<br>& RESEARCH DISCLOSURE,<br>vol.301, no.068, 10 May 1989 | 1,3-6, 10,15, 17,18, 23-27,29 | |
| X | US-A-4 688 039 (BERK)<br><br><br>* abstract; column 1, line 6 - column 2, line 41; column 5, lines 14 - 59; figures 1, 8 * | 1-10,15, 16, 18-21, 23-30 | |
| X<br>A | EP-A-0 560 431 (N.V.PHILIPS' GLOEILAMPENFABRIEKEN)<br><br>* abstract; column 4, line 15 - column 5, line 50; figures 1- 4 * | 1,15,24, 25,29<br>5,10-12 | **TECHNICAL FIELDS SEARCHED** (Int.Cl.6)<br><br>F26B<br>G05D<br>G01K<br>H04B<br>G08C |
| A | US-A-4 386 471 (BOWREY ET AL.)<br><br><br>* abstrat; column 2, line 64 - column 3, line 52; figure 1 *<br>---<br>-/-- | 2,5,9, 16-18, 24,25 | |

The present search report has been drawn up for all claims

| Place of search | Date of completion of the search | Examiner |
|---|---|---|
| BERLIN | 24 January 1995 | Beitner, M |

**European Patent Office**

## EUROPEAN SEARCH REPORT

Application Number

EP 94 30 7936

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-86 01058 (ROBERT BOSCH GMBH)<br>* abstract; page 1, line 5 - page 3, line 27; figure 1 * | 10-14,29 | |
| | | | **TECHNICAL FIELDS SEARCHED    (Int.Cl.6)** |

The present search report has been drawn up for all claims

| Place of search | Date of completion of the search | Examiner |
|---|---|---|
| BERLIN | 24 January 1995 | Beitner, M |

EPO FORM 1503 03.82 (P04C01)